# EUROPEAN PATENT APPLICATION

(11) **EP 2 538 671 A1**
(43) Date of publication of application: **26.12.2012**
(21) Application number: 11742023.2
(22) Date of filing: 09.02.2011
(51) Int. Cl.: H04N 7/173, H04N 5/765, H04N 5/91, H04N 7/26

(54) **CONTENT COMMUNICATION DEVICE, CONTENT PROCESSING DEVICE AND CONTENT COMMUNICATION SYSTEM**

(30) Priority: 15.02.2010 JP 2010030230
(71) Applicant: Panasonic Corporation, Kadoma-shi Osaka 571-8501 (JP)
(72) Inventor: HIRANO, Jun, Osaka 540-6207 (JP); MORII, Toshiyuki, Osaka 540-6207 (JP)
(74) Representative: Grünecker, Kinkeldey, Stockmair & Schwanhäusser
(86) International application number: PCT/JP2011/000711
(87) International publication number: WO 2011/099273

(57) **Abstract**

Disclosed is a technique in which, upon relay broadcasting, a location side can check quickly on how the actions at the location (location side) are reflected as a broadcasting content. According to the technique, a content communication device at the location uses hierarchical coding to encode shot content data into coarse material content coded data of a core layer and broadcast-level material content content coded data of an enhancement layer. The coarse material content coded data is transmitted immediately to a content processing device at a coordination station. The content processing device performs, on the coarse material content, editing processing (or part thereof) to be performed for actual broadcasting, and sends back the content as a coordinating content. For example, the coordinating content has the same composition as an actually broadcast content (i.e., the position of synthesized information is the same, or the like), so that coordination based on the final broadcast content can be done at the location with reference to the coordinating content.

## Description

### TECHNICAL FIELD

The present invention relates to a content communication device, a content processing device and a content communication system for encoding and transmitting content data.

### BACKGROUND ART

With the improvement of mobile communication technologies, the 3rd Generation Partnership Program (3GPP) has developed mobility (high-speed movement of a terminal device) support, broadband (high-throughput) data communication support, and the like, to enable the transmission of multimedia data such as video as well as sound in order to provide wireless communication services across a very broad range.

In multimedia data communication, data to be transmitted, such as sound and video, is encoded and transmitted to achieve efficiency, stabilization, and the like, at various points, such as the bandwidth consumption of communication channels and the channel properties. As one of such data encoding methods, there is a hierarchical coding technique.

In the hierarchical coding technique, video and sound are classified by quality, intended purpose, or the like, and layered in respective levels so that additional information will be encoded as an information block separable from fundamental data. Each information block can be sent and received individually, and synthesized as required so that one coded data group can be used in various environments. As a precedent method already employed internationally as the hierarchical audio coding technique, there is a technique described in Non-Patent Document 1 cited below.

Further, as a method of transmitting sound and video, there is broadcasting/delivery of video/sound such as television broadcasting. The video/audio data used for such broadcasting/delivery is called a content. As a method of recording and relaying a content, the content is formatted and transmitted from a remote place to the facilities such as a broadcast station where the content is edited so that the content may be synthesized with a content being filmed at a studio (or solely the relayed content) and switched thereto. For example, the contents are synthesized by overlapping a content being filmed at the studio into the screen of video (a content from the remote place) shot at the relay destination using PinP (Picture in Picture) or superimposing characters or figures (generally called a telop) onto the video (the content from the remote place) shot at the relay broadcasting point.

Even when a content shot at a remote place is broadcasted in real time (generally called live broadcasting), the content shot at the remote place is often transmitted once to a television station in the case of television broadcasting or the facilities where a delivery server is located in the case of network delivery, rather than directly broadcasted from the location. Even if the final content is not to be live broadcast, such as to relay within recorded contents, the content will be relayed (transmitted to a coordination station).

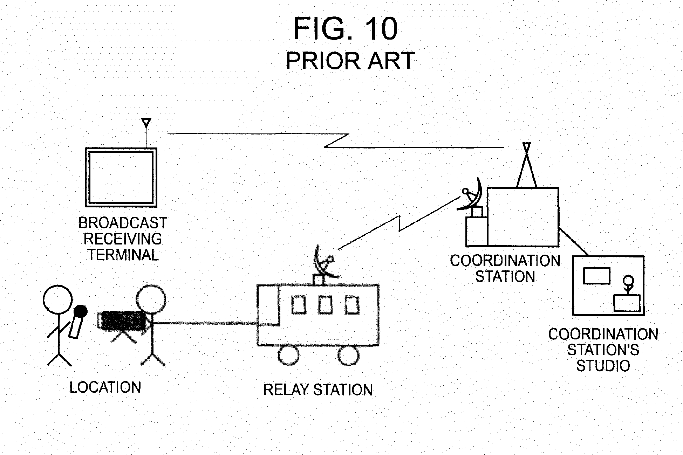

In this specification, in order to make the terminology simple, a content shooting point, such as a remote place or a relay broadcasting point, is called a location, the facilities for formatting and editing a content (editing equipment at a television station, a switching device, the transmission facilities for broadcasting/delivery, or an adjacent studio (coordination station's studio) are called the coordination station, and a point for handling data as a content along a transmission path from the location to the coordination station is called a relay station. Note that the relay station does not mean mere data relay or radio communication relay: it is a facility for relay broadcasting to handle the content in a restricted sense. In the case of television broadcasting, the relay station means a facility called an outdoor broadcasting van or a studio located away from the coordination station. This relay station is situated as required: it is not an indispensable facility. Specifically, a system configuration as shown in FIG. 10 is premised.

FIG. 10 is a diagram showing an example of the general configuration of a broadcasting system for relay broadcasting from a remote location. Video and sound captured at the location are transmitted as a shot content to a coordination station via a relay station. At the coordination station, for example, this shot content is so output that it can be viewed and listened to in a studio of the coordination station. Then, the picture of the coordination station's studio is inserted by PinP into the video of the shot content and other information (a telop and the like) is inserted to generate a broadcasting content to be finally broadcasted and to broadcast it over the airwaves. The broadcasting content broadcasted over the airwaves is processed on a broadcast receiving terminal receiving the airwaves to display video and output sound.

When the content shot at the location is transmitted to the coordination station (especially, in the case of live broadcasting), persons at the location may be required to check a content (final broadcast content) synthesized at the coordination station. For example, if it is relay broadcasting such as television broadcasting, operators of equipment, such as cameras and microphones, and the cast to be shot (shooting target persons) at the location need to check the content (final broadcast content) obtained by synthesizing the content shot at the location with information and/or BGM (BackGround Music) from the coordination station's studio.

It is considered that a shooting target person has some dialogue with someone in the studio of the coordination station. Therefore, for coordination of timings in the final broadcast content, it is necessary to insert natural comments, check on the timing of starting relay broadcasting, adjust pauses for natural dialogue with the studio, check on overlaps between sound such as BGM at the studio of the coordination station and the speech of the shooting target person, and the like. Further, the operators of equipment need mainly to check on the shooting method for and timing of a content in the final broadcast content. It is also considered that the location side also receives instructions from the coordination station or the relay station as well as the content such as the final broadcast content (since these are communication contents during shooting, these contents are not necessarily reflected in the final content).

Such checks on the location side are required because the timing at which a person in the coordination station's studio makes a comment, the timing of finally broadcasting the content, and the instructions from the coordination station or the relay station are delayed significantly. In other words, the operators and the shooting target persons at the location need to coordinate the timings of their own acts in tune with the timing of the final broadcast content. Thus, the operators and the shooting target persons on the location side are required to check on the timing of starting relay broadcasting, adjust pauses for natural dialogue with the studio, check on overlaps between sound such as BGM at the studio of the coordination station and the speech of a shooting target person, adjust a composition in consideration of a telop, textual information, synthesized screen, and the like (i.e., adjust the camera shooting direction or stance in the screen), and so on.

### PRIOR ART DOCUMENTS

### PATENT DOCUMENTS

Patent Document 1: Japanese Patent Application Publication No. 2004-357205
Patent Document 2: Japanese Patent Application Publication No. 2005-277950

### NON-PATENT DOCUMENT

Non-patent Document 1: ITU-T (International Telecommunication Union-Telecommunication sector) Recommendation G.729.1, May, 2006.

However, in relay broadcasting or the like, if the delay for checking the content (final broadcast content) at the location becomes large, it will become difficult to achieve natural relay or dialogue for the audience, causing the following problems:
- Speech from the location crashes into speech at the coordination station's studio.
- The timing of BGM or a sound effect inserted at the coordination station is out of sync with the timing of speech at the location.
- An area in which a caption, marks, and additional information are inserted at the coordination station overlaps with shooting target persons (or objects).
- The timing of switching to relay broadcasting is off.
- Broadcast is started at a timing that is not intended at the location (by the shooting target persons).

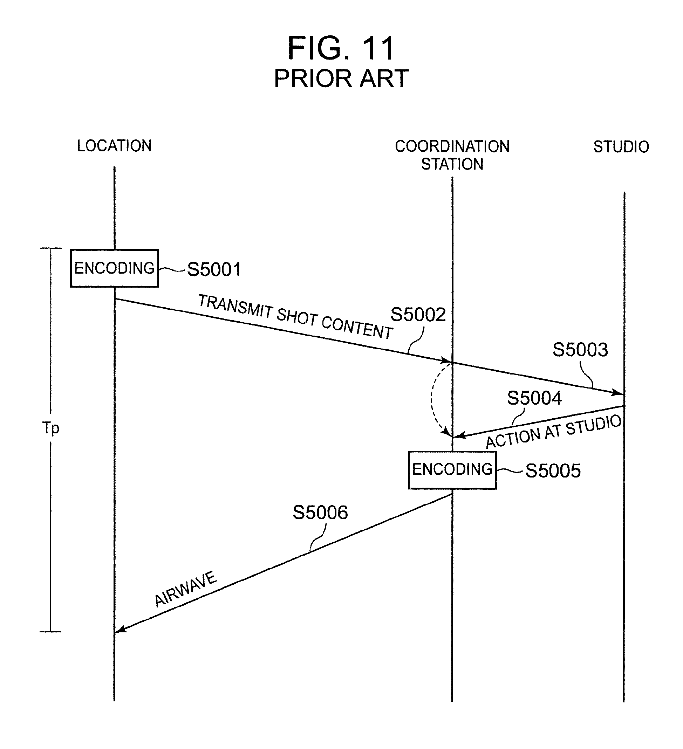

For example, the operators and the shooting target persons at the location can receive actual television broadcast waves at the location and refer to the video for coordination. FIG. 11 is a sequence chart showing an example of content processing in a prior-art broadcasting system. This sequence chart is illustrated by focusing attention on content data at a certain time, but data including the shot content and the broadcasting content are actually transmitted and processed sequentially.

There is a camera at the location to take pictures of the location. A content shot with the camera is subjected to encoding and the like (step S5001), and then transmitted to the coordination station (step S5002). At the coordination station, the shot content is once decoded (this processing is not shown), and then output to a monitor or the like in the studio of the coordination station (step S5003) to take a video of actions as responses to the shot content (reactions of persons in the studio) (step S5004), and perform processing for superimposing the video by PinP onto the content shot at the location or a telop and other various information onto the content shot at the location, encoding processing, and the like, to create a broadcasting content (step S5005). Then, the broadcasting content is broadcasted over the airwaves (step S5006), enabling people to watch the broadcasting content on a broadcast receiving terminal capable of receiving the airwaves (e.g., the broadcast receiving terminal allowing the operators and the shooting target persons to watch at the location). At this point (after time Tp from a certain operation), the operators and the shooting target persons at the location can check on how their actions are reflected in the broadcasting content.

The time Tp at which the operators and the shooting target persons at the location can check on how the content shot at the location is used in the actual broadcasting content (how it is seen in the actual broadcast) is delayed for a period of time required for data transmission and encoding. In other words, when an operator or a shooting target person at the location conduct some act, the broadcasting content in which the act is reflected becomes viewable through the airwaves after the time Tp. Although the operators and the shooting target persons at the location can watch the broadcasting content through the airwaves even before the time Tp has elapsed, since a shot content included in the broadcasting content reflects a certain act before the act (reflected in the shot content encoded in step S5001), it is not adequate as the content for use in coordination. When conducting a certain act, the operator or the shooting target person at the location needs to use, for coordination, a content in which the act is reflected.

Here, for example, focusing on the delay time when the airwaves for television broadcasting, such as analog broadcasting in Japan, are received, the content can be checked at the location with relatively low delay. However, when digital broadcasting or the like is employed (i.e., when people have no other choice because of the discontinuance of analog broadcasting), the delay time becomes large, and this makes it difficult to avoid the above-mentioned inconveniences.

In addition to the delay in digital broadcasting, scenes telecasted in a situation with limited throughput (wireless IP connection) have recently been increasing. Depending on the utilization form, the low-throughput environment increases the delay time, and hence there is a need to give ample consideration of efficient data transmission in the low-throughput environment.

### SUMMARY OF INVENTION

In order to solve the above problems, it is an object of the present invention to provide a content communication device, a content processing device and a content communication system in which, upon relay broadcasting from a location, the location side can check quickly on how the actions at the location (location side) are reflected as a broadcasting content.

In order to attain the above object, the content communication device of the present invention is a content communication device for transmitting content data shot at a location to a content processing device for editing a broadcasting content, the content communication device comprising:
a shot content acquiring section for acquiring the shot content data;
a first encoding section for encoding, with a predetermined quality, the shot content data acquired by the shot content acquiring section to generate first coded data;
a first transmission section for transmitting the first coded data generated by the first encoding section sequentially toward the content processing device;
a second encoding section for extracting, from the shot content data, additional information for increasing a quality of video included in the first coded data and encoding the additional information to generate second coded data; and
a second transmission section for transmitting the second coded data generated by the second encoding section toward the content processing device.

According to this configuration, upon relay broadcasting from a location, information for enabling the location side to check quickly on how the actions at the location (location side) are reflected as a broadcasting content can be transmitted from the location to a coordination station.

Further, in order to attain the above object, the content communication device of the present invention is a content communication device for transmitting content data shot at a location to a content processing device for editing a broadcasting content, the content communication device comprising:
a shot content acquiring section for acquiring the shot content data;
a shot content transmission section for transmitting the shot content data acquired by the shot content acquiring section toward the content processing device;
a coordinating content receiving section for receiving a coordinating content sent back after some or all editing jobs to be reflected in an actual broadcasting content are performed on the shot content data in the content processing device; and
a coordinating content output section for outputting the coordinating content to enable a user at the location to check on the coordinating content.
According to this configuration, upon relay broadcasting from a location, information for enabling the location side to check quickly on how the actions at the location (location side) are reflected as a broadcasting content can be transmitted from the location to the coordination station.

In order to attain the above object, the content processing device of the present invention is a content processing device for editing a broadcasting content, comprising:
a first coded data receiving section for receiving first coded data from a content communication device acquiring content data shot at a location, wherein the content communication device encodes the shot content data with a predetermined quality to generate the first coded data;
a first coded data decoding section for decoding the first coded data;
an editing processing section for performing, on the first coded data after being decoded, some or all editing jobs to be reflected in an actual broadcasting content; and
a coordinating content transmission section for transmitting the decoded first coded data edited by the editing processing section toward the content communication device as a coordinating content.
According to this configuration, upon relay broadcasting from a location, the location side can check quickly on how the actions at the location (location side) are reflected as a broadcasting content.

Further, in order to attain the above object, the content processing device of the present invention is a content processing device for editing a broadcasting content, comprising:
a shot content data receiving section for receiving content data shot at a location from the content communication device;
an editing processing section for performing, on the received shot content data, some or all editing jobs to be reflected in an actual broadcasting content; and
a coordinating content transmission section for transmitting the shot content data edited by the editing processing section toward the content communication device as a coordinating content.
According to this configuration, upon relay broadcasting from a location, the location side can check quickly on how the actions at the location (location side) are reflected as a broadcasting content.

In order to attain the above object, the content communication system of the present invention is a content communication system configured to include a content processing device for editing a broadcasting content and a content communication device for transmitting content data shot at a location to the content processing device, wherein
the content communication device includes:
a shot content acquiring section for acquiring the shot content data;
a first encoding section for encoding, with a predetermined quality, the shot content data acquired by the shot content acquiring section to generate first coded data;
a first transmission section for transmitting the first coded data generated by the first encoding section sequentially toward the content processing device;
a second encoding section for extracting, from the shot content data, additional information for increasing a quality of video included in the first coded data and encoding the additional information to generate second coded data;
a second transmission section for transmitting the second coded data generated by the second encoding section toward the content processing device;
a coordinating content receiving section for receiving a coordinating content sent back after some or all editing jobs to be reflected in an actual broadcasting content are performed on the first coded data in the content processing device; and
a coordinating content output section for outputting the coordinating content to enable a user at the location to check on the coordinating content, and
the content processing device includes:
   a first coded data receiving section for receiving the first coded data from the content communication device;
   a first coded data decoding section for decoding the first coded data;
   an editing processing section for performing, on the first coded data after being decoded, some or all editing jobs to be reflected in an actual broadcasting content;
   a coordinating content transmission section for transmitting the first coded data after being decoded and edited by the editing processing section toward the content communication device as the coordinating content;
   a second coded data receiving section for receiving the second coded data from the content communication device;
   a second coded data decoding section for decoding the second coded data; and
   a broadcasting content output section for outputting, as a broadcasting content to be actually broadcasted, a content obtained by editing a content in the editing processing section, wherein the content to be edited is obtained by adding the first coded data after being decoded and the second coded data after being decoded, or a content obtained by reflecting the decoded second coded data in the coordinating content.
   According to this configuration, upon relay broadcasting from a location, the location side can check quickly on how the actions at the location (location side) are reflected as a broadcasting content.

Further, in order to attain the above object, the content communication system of the present invention is a content communication system configured to include a content processing device for editing a broadcasting content and a content communication device for transmitting content data shot at a location to the content processing device, wherein
the content communication device includes:
a shot content acquiring section for acquiring the shot content data;
a transmission section for transmitting, toward the content processing device, the shot content data acquired by the shot content acquiring section;
a coordinating content receiving section for receiving a coordinating content sent back after some or all editing jobs to be reflected in an actual broadcasting content are performed on the shot content in the content processing device; and
a coordinating content output section for outputting the coordinating content to enable a user at the location to check on the coordinating content, and
the content processing device includes:
   a shot content data receiving section for receiving the shot content data from the content communication device;
   an editing processing section for performing, on the received shot content data, some or all editing jobs to be reflected in an actual broadcasting content;
   a coordinating content transmission section for transmitting the shot content data edited by the editing processing section toward the content communication device as a coordinating content; and
   a broadcasting content output section for creating and outputting a broadcasting content in which the content edited by the editing processing section is reflected.
   According to this configuration, upon relay broadcasting from a location, the location side can check quickly on how the actions at the location (location side) are reflected as a broadcasting content.

The present invention has the above-mentioned configurations, having the advantage of enabling the location side to check quickly on how the operation performed at the location (location side) is reflected as a broadcasting content upon relay broadcasting from the location.

### BRIEF DESCRIPTION OF DRAWINGS

[FIG. 1] It is a sequence chart showing an example of content processing in a broadcasting system according to a first embodiment of the present invention.
[FIG. 2] It is a sequence chart showing an example of content processing in a broadcasting system according to a second embodiment of the present invention.
[FIG. 3] It is a diagram showing a schematic image of an encoding and transmission method in the second embodiment of the present invention.
[FIG. 4] It is a diagram showing an example of the configuration of a content communication terminal for location in the second embodiment of the present invention.
[FIG. 5] It is a block diagram showing a first example of the configuration of a content communication device for coordination station in the embodiment of the present invention.
[FIG. 6] It is a block diagram showing a second example of the configuration of the content communication device for coordination station in the embodiment of the present invention.
[FIG. 7] It is a block diagram showing a third example of the configuration of the content communication device for coordination station in the embodiment of the present invention.
[FIG. 8] It is a block diagram showing an example of the configuration of a shot content encoder in the second embodiment of the present invention.
[FIG. 9] It is a block diagram showing an example of the configuration of a broadcast-level material content decoder and a sent-back content encoder in the second embodiment of the present invention.
[FIG. 10] It is a diagram showing an example of the general configuration of a broadcasting system for relay broadcasting from a remote location.
[FIG. 11] It is a sequence chart showing an example of content processing in a prior-art broadcasting system.

### DESCRIPTION OF EMBODIMENTS

Embodiments of the present invention will now be described with reference to the accompanying drawings.

### <First Embodiment of the Invention>

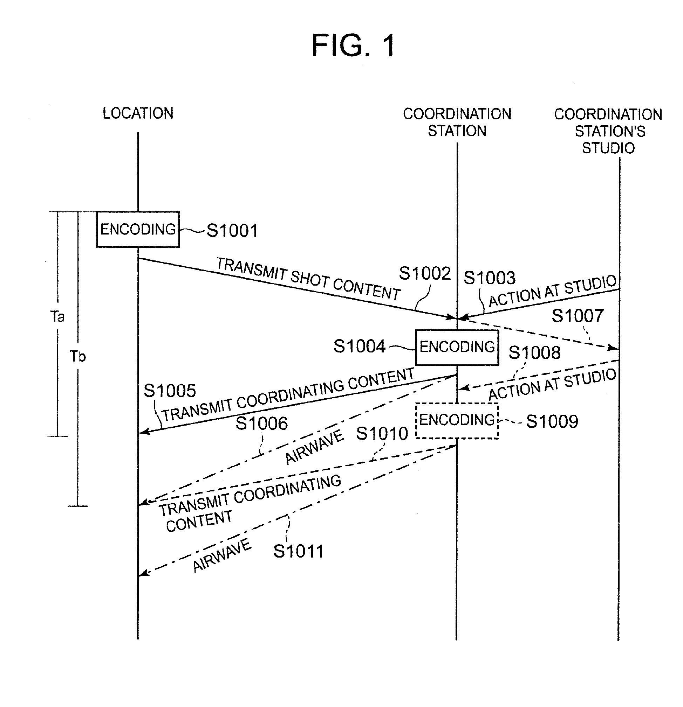

Description will be made first on a first embodiment of the present invention. FIG. 1 is a sequence chart showing an example of content processing in a broadcasting system according to a first embodiment of the present invention. Although this sequence chart focuses on content data at a certain time, data including a shot content, a coordinating content, and a broadcasting content are actually transmitted and processed sequentially. Further, this sequence chart includes both a case where an action at a studio of a coordination station is synthesized intact at the coordination station and a case where it is synthesized in sync with a response (in tune with a response content) at the studio of the coordination station. For transmission of a coordinating content, either or both of the cases can be used in accordance with the intended use, while for a content to be broadcasted, either of the cases is generally used depending on the system configuration to be described later or the mode of broadcasting.

There is a camera at a location to take pictures of the location. A content shot with the camera is subjected to encoding and the like (step S1001), and then transmitted to the coordination station (step S1002). At the coordination station, the shot content is once decoded (this processing is not shown), and then output to a monitor or the like in the studio of the coordination station (step S1007) while taking a video of actions (reactions of a person(s) in the studio of the coordination station) acquired at the studio of the coordination station concurrently (step S1003) to perform processing for superimposing the video by PinP onto the content shot at the location or a telop and other various information onto the content shot at the location, encoding processing, and the like, in order to create a final content (a content used as a broadcasting content) (step S1004). Although the final content thus created is broadcasted over the airwaves (step S1006), the broadcasting content is transmitted as a coordinating content from the coordination station to the location using a communication path (a transmission path capable of transmitting the content to the location) different from that of the airwaves (step S1005) to enable operators and shooting target persons at the location to check at an early timing on the coordinating content (the same content as the broadcasting content) including the shot content in which a certain action is shot. In this case, although the coordinating content is a content including the same content as the broadcasting content, it is desired to reduce the volume of data on the coordinating content using an encoding method with less processing load in order to reduce the delay in consideration of the throughput of the communication path from the coordination station to the location.

In the case of a content synchronized with an action at the studio of the coordination station (reaction of a person in the studio of the coordination station acquired in step S1008) as a response to the shot content transmitted in step S1001, video/sound at the coordination station acquired in step S1008 and the shot content received from the location in step S1001 are synthesized and encoded (step S1009), and then transmitted as a coordinating content (and a broadcasting content) from the coordination station (step S1010 and step S1011).
In this case, although the coordinating content is a content including the same content as the broadcasting content, it is desired to reduce the volume of data on the coordinating content using an encoding method with less processing load in order to reduce the delay in consideration of the throughput of the communication path from the coordination station to the location. In the drawing, although the time required for one round of step S1007 and step S1008 is drawn long, since the coordination station is generally located next to the studio of the coordination station in a practical sense, it is considered that the time required for processing step S1007 and step S1008 is short.

According to the prior art, a shot content in which actions at the location are reflected is included in the broadcasting content to be broadcasted in step S1011. On the other hand, according to the first embodiment of the present invention, when an action at the studio of the coordination station is synthesized intact at the coordination station, or when only the content shot at the location is used to create the broadcasting content, the operators and the shooting target persons at the location can watch, after time Ta, a coordinating content including a shot content in which a certain action is shot, while when it is synthesized in sync with a response (in tune with a response content) at the studio of the coordination station, they can watch, after time Tb, a coordinating content including a shot content in which the certain action is shot. Both a coordinating content without synchronization with the response at the studio of the coordination station and a coordinating content synchronized with the response at the studio of the coordination station may be sent back to the location. Alternatively, a portion synchronized with the response at the studio of the coordination station and a portion without synchronization may be mixed in one coordinating content. A reaction to a certain action at the studio of the coordination station can be made viewable after time Tb. In other words, the operators and the shooting target persons at the location can check on the broadcasting content quickly compared with the prior art.

FIG. 1 is illustrated to include, in the broadcasting content, video/sound with the actions captured at the studio of the coordination station. However, for example, when the shot content from the location is broadcasted as it is (i.e., in the case of video, the shot content is broadcasted on the whole screen), the video/sound at the studio of the coordination station does not necessarily need to be included in the broadcasting content. In other words, content transmissions in step S1003, S1007, and S1008 are not indispensable.

As described above, according to the first embodiment of the present invention, the coordination station immediately uses the shot content received from the location (particularly, while acquiring video/sound at the studio of the coordination station concurrently) to create a broadcasting content, so that a content (a shot content in which a certain action at the location is reflected) usable at the location for coordination can be made viewable quickly compared with the prior art. Further, the coordination station uses a communication channel different from that for a broadcasting content to send the same content as the broadcasting content back to the location as a coordinating content, so that a content usable at the location for coordination can be made viewable at the location more quickly.

### <Second Embodiment of the Invention>

Next, a second embodiment of the present invention will be described. The second embodiment of the present invention is to add an innovative content encoding method to the aforementioned first embodiment in order to make the coordinating content viewable at the location more quickly.

According to the aforementioned first embodiment, the coordinating content is made viewable at the location quickly compared with the prior art, but the effect may not be exerted under specific conditions. As one of the conditions, there is a case where the throughput of a communication channel between a location (or a relay station) and a coordination station is limited.

In the aforementioned first embodiment, it is expected that a content used for the purpose of coordination can be made viewable at the location quickly compared with that using the prior art in both cases of receiving a coordinating content from the coordination station and receiving a broadcasting content over the airwaves. However, when the broadcasting content included in the airwaves is viewed for coordination (when the coordinating content is not transmitted), the location is eventually affected by the influence of a delay resulting from transmission of and processing for the airwaves. Particularly, when digital broadcasting is employed, the delay time is so long that the operators and the shooting target persons at the location can find it inconvenient. If analog broadcasting is employed, the delay time will be shorter than that when digital broadcasting is employed. However, since analog broadcasting is supposed to be terminated, easy use of analog broadcasting is in no situation to expect, and both the location (or the relay station) and the coordination station have no other choice but to introduce equipment for analog broadcasting and communication lines with a wireless frequency therefor as special equipment for the intended purpose of coordination.

Further, in the aforementioned first embodiment, when the coordinating content is transmitted using a communication channel different from that for the airwaves, the coordinating content is supposed to be transmitted faster because of no influence of a delay underlying in digital broadcasting. However, a trunk circuit for transmission between the location or the relay station and the coordination station may go through wireless communication, and hence an environment capable of obtaining sufficient throughput cannot be always established. Therefore, although there is also a need to compress data on the coordinating content transmitted from the coordination station to the location, when a coordinating content with the same level of quality as the broadcasting content is transmitted in a low-throughput environment, a great delay associated with encoding and data compression can be added because of the need to increase the data compression rate of the coordinating content. Thus, the throughput of the communication channel between the location (or the relay station) and the coordination station has a trade-off relationship with encoding for increasing the data compression rate, and hence an efficient encoding method needs to be adopted properly.

Therefore, in the second embodiment of the present invention, a hierarchical coding technique is applied as a method of encoding the shot content and the coordinating content transmitted between the location and the coordination station to realize the establishment of a more efficient broadcasting system.

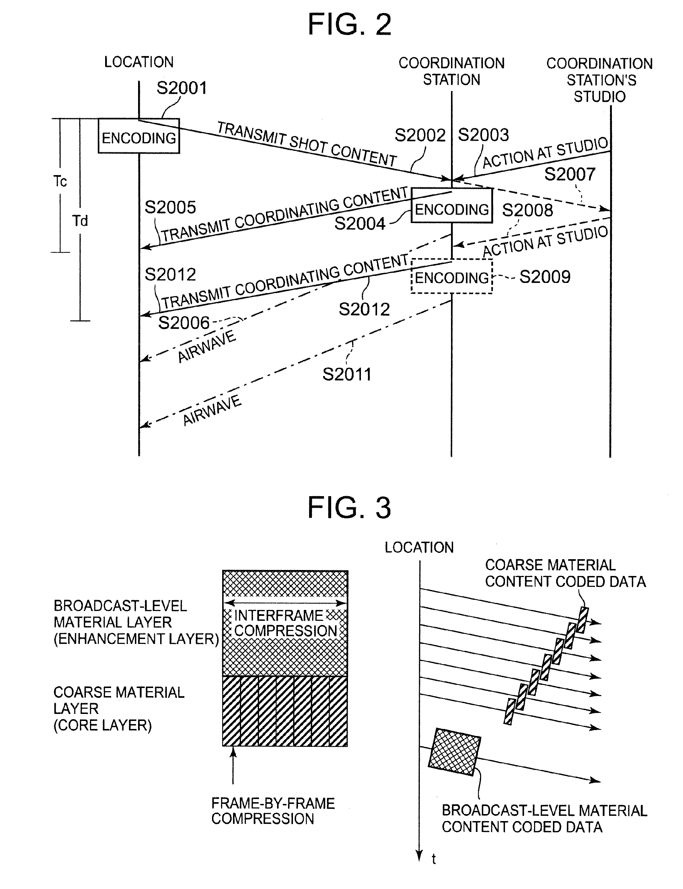

FIG. 2 is a sequence chart showing an example of content processing in a broadcasting system according to the second embodiment of the present invention. This sequence chart is illustrated by focusing on content data at a certain time, but data including the shot content, the coordinating content, and the broadcasting content are actually transmitted and processed sequentially.

There is a camera at the location to take pictures of the location. A content shot with the camera is subjected to encoding and the like (step 2001), and then transmitted to the coordination station (step S2002).

Here, as a method of encoding a shot content from the location, data on coarse materials, which can be subjected to sequential encoding, are transmitted sequentially from the location to place emphasis on delay reduction, rather than use of an encoding method practiced across high-quality and high-compression frames even in a state of throughput degradation. Specifically, a hierarchical coding method is applied to the method of encoding the shot content in such a manner that the shot content is hierarchically divided into a coarse material (core) layer and a broadcast-level material (enhancement) layer and encoded. The coarse material layer and the broadcast-level material layer can be separated from each other, and transmitted and received individually. Further, they can be synthesized to obtain the original coded data group (shot content). In this specification, description will be given mainly on a case where a content is hierarchically divided into two layers, but it may be hierarchically divided into three or more layers.

The coarse material (core) layer is to encode a set of coding parameters capable of being subjected to fast encoding, such as low resolution, narrowband, monochrome, and mono, and perform fast sequential transmission such as frame-by-frame transmission. The fast sequential transmission is divided into transmission units shorter in data transmission unit time, such as per scanning line, per scanning line group, per sub-phonetic segment, or per sub-phonetic segment group. In this specification, coded data belonging to the coarse material (core) layer is called coarse material content coded data.

On the other hand, the broadcast-level material (enhancement) layer is to encode a set of coding parameters necessary for the final content, such as high resolution, broadband, stereo, and wide gamut of colors. In this case, high-compression encoding including interframe compression may be performed. Note that the set of coding parameters need to be encoded and transmitted within a range that allows for the delay upon broadcasting/delivery of the final content (i.e., the delay determined from a standpoint different from that for sending it back), and it is desired to set them in consideration of the operation of the entire system and the delay time. In this specification, coded data belonging to the broadcast-level material (enhancement) layer is called broadcast-level material content coded data, decoding processing for decoding both the coarse material content coded data and the broadcast-level material content coded data so that the original shot content can be checked is called broadcast-level material content decoding, and the content decoded by the broadcast-level material content decoding is called broadcast-level material content.

FIG. 3 is a diagram showing a schematic image of an encoding and transmission method in the second embodiment of the present invention. At the location, hierarchical coding is applied to certain data to be encoded to perform fast encoding on the coarse material layer in predetermined units of processing and transmit the created coarse material content coded data sequentially to the coordination station. On the other hand, as for the broadcast-level material layer, since advanced encoding is also performed, content coded data of the coarse material layer is encoded later than the corresponding coarse material content, and transmitted to the coordination station. Unlike the coarse material layer, the broadcast-level material layer does not need to perform sequential transmission, and for example, interframe high-compression coding or the like may be performed in consideration of transmission efficiency and the like. Thus, coarse material content coded data created by fast encoding is transmitted sequentially from the location, and later, the broadcast-level material content coded data is transmitted.

At the coordination station, the first-incoming coarse material content coded data is used to perform processing for synthesizing and processing acts in the studio (responses at the studio of the coordination station), BGM, sound effects, a telop, and the like on the coarse material content coded data in order to create and send a coordinating content (sent-back content) (step S2004) back to the location (step S2005). In this case, through depending on an editing processing system at the coordination station, synthesis toward the final content (the content used as the broadcasting content) may be performed in the level of the content data, or in the level of other metadata. In other words, the coordination station may perform processing for synthesizing and switching the coarse material content coded data by a method easy to synthesize it with the broadcast-level material content data coming a little later. Video/sound at the studio of the coordination station are acquired concurrently (step S2003) and reflected in the coordinating content. Likewise, the video/audio data from the studio of the coordination station to the coordination station may also be divided by hierarchical coding into a coarse material layer and a broadcast-level material layer.

Further, at the coordination station, the broadcast-level material layer received later is further synthesized to generate data for broadcasting/delivery, process it into a content for broadcasting/delivery (step S2004), and broadcasted as the broadcasting content (step S2006). In television broadcasting or the like, CM contents and the like may be further inserted to create the final content, and the content for broadcasting/delivery may be archived as a master content and subjected to further editing and transcoding (format conversion in the case of delivery, or the like). Since these processing activities are processing sections related to normal workflows at the coordination station, respectively, any processing can be adopted.

Basically, at the coordination station, the content created by editing and processing the first-coming coarse material layer is sent back to the location as the coordinating content, and such an operation to create the final content by using the fact that the shot content can be obtained by synthesizing the first-coming coarse material layer with the broadcast-level material layer coming later is performed. Some methods are considered as such a synthesis method.

For example, depending on the synthesis method, after the original coarse material content layer and broadcast-level material content layer are synthesized, video/audio data at the studio of the coordination station, and the like, can be acquired (video/audio data matching the timing of response may be acquired) and synthesized. In other words, upon receiving the coarse material layer, video/sound (coarse material) at the location and video/sound (which may be a coarse material content) at the studio of the coordination station are edited and processed to create a coordinating content, while upon receiving the broadcast-level material layer, video/sound (coarse material) at the location, video/sound (broadcast-level material) at the location, and newly acquired video/sound at the studio of the coordination station may be edited and processed to create the final content. In FIG. 2, for example, a shot content (which may be a coarse material content or a broadcast-level material content synthesized with the broadcast-level material) is output to the studio of the coordination station (step S2007), and once video/audio data including an action at the studio as a response to the content can be acquired at the coordination station (step S2008), a broadcasting content using the video/audio data matching the timing of response may be created (step S2009) and broadcasted over the airwaves (step S2011). In the drawing, although the time required for one round of step S2007 and step S2008 is drawn long, since the coordination station is generally located next to the studio of the coordination station in a practical sense, it is considered that the time required for processing step S2007 and step S2008 is short.

Further, in the case of a codec capable of hierarchically stacking layers to upper levels, each of video/sound (coarse material) at the location and video/sound (coarse material) at the studio of the coordination station may be edited and processed upon receiving the coarse material layer to create a coordinating content, and upon receiving the enhancement layer, video (broadcast-level material) at the location and video/sound (broadcast-level material) at the studio of the coordination station may be added to the coordinating content to create the final content.

The operators and the shooting target persons at the location can watch the reaction in the studio to the shot content transmitted in step S2001 (the action at the studio of the coordination station) at the timing of transmission (step S2012) of the coordinating content.

Like in the aforementioned first embodiment of the present invention, the second embodiment of the present invention may be such that video/sound from the location is synthesized at the coordination station with the action at the studio of the coordination station as they are, or that video/sound from the location is synthesized in sync with the response at the studio of the coordination station (in tune with the response content). In the second embodiment of the present invention, when the action at the studio of the coordination station is synthesized as it is at the coordination station, or when only the content shot at the location is used to create a broadcasting content, the operators and the shooting target persons at the location can watch, after time Tc, the coordinating content including a shot content in which a certain action is shot, while when it is synthesized in sync with a response (in tune with a response content) at the studio of the coordination station, they can watch the reaction to the certain action at the studio of the coordination station after time Td (at the timing of watching the coordinating content received in step S2012. Both the coordinating content without synchronization with the response at the studio of the coordination station and the coordinating content synchronized with the response at the studio of the coordination station may be sent back to the location. Alternatively, a portion synchronized with the response at the studio of the coordination station and a portion without synchronization may be mixed in one coordinating content. In other words, the operators and the shooting target persons at the location can check on the broadcasting content quickly compared with the prior art. Further, the delay time is further reduced compared with the aforementioned first embodiment of the present invention.

Any transmission technique can be used for a communication channel between the location and the coordination station. For example, when a 3GPP line is used, it is desired to set a different QoS (Quality of Service) for each of the coarse material and the broadcast-level material. Specifically, it is desired that the coarse material content coded data should be transmitted as data for which no delay is allowed, and that the broadcast-level material content coded data should be transmitted correctly in large volumes while allowing for some delay time. It is also desired that data transmission should be managed separately, such as bearer, PDN (Packet Data Network) connection, session, and the like.

As described above, according to the operation in the second embodiment of the present invention, the coordination station applies hierarchical coding at the location, and uses the coarse material content immediately from the shot content sent by controlling the transmitted layer and the timing to create a content (a coordinating content in which a certain action at the location is reflected) usable for coordination at the location and send the content back to the location in order to make it viewable at the location quickly compared with the prior art. since the coordination station performs, on the coarse material content, the same editing and processing as the broadcasting content to be broadcasted after that in terms of at least the timing, additional information, the composition, and the like, to create the coordinating content, the location side can grasp how the shot content is reflected in the final broadcasting content accurately and quickly from the coordinating content.

Next, a configuration example of a content communication terminal for the location will be described. The following will illustrate that all functional blocks are mounted in one content communication terminal for the location, but respective functional blocks may be mounted in a distributed manner in plural devices connected through an interface.

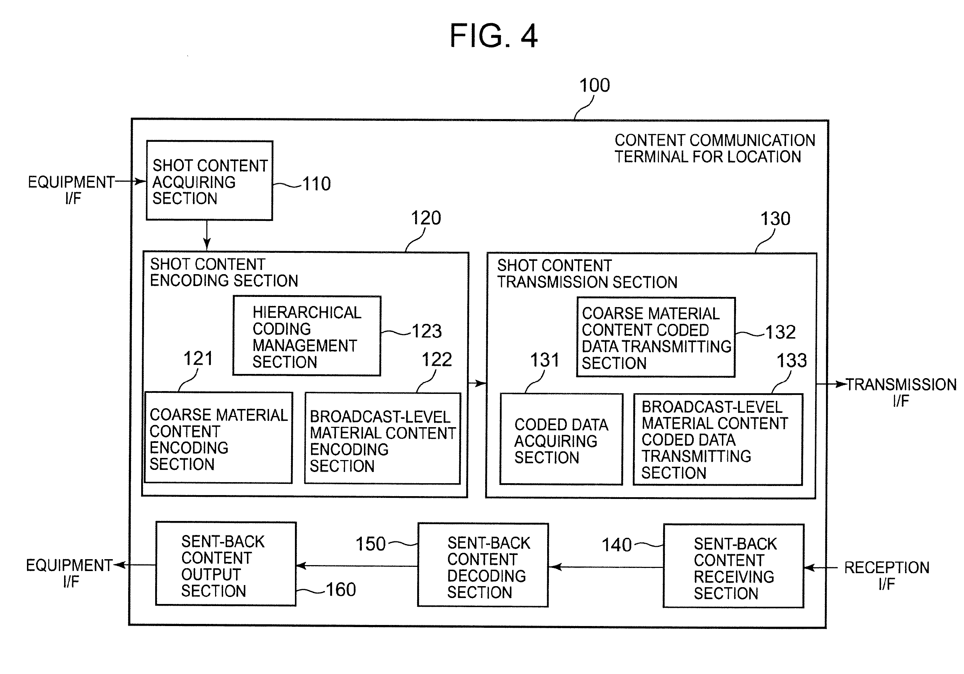

FIG. 4 is a block diagram showing an example of the configuration of the content communication terminal for the location in the second embodiment of the present invention. A content communication terminal 100 for the location shown in FIG. 4 is configured to include a shot content acquiring section 110, a shot content encoding section 120, a shot content transmission section 130, a sent-back content receiving section 140, a sent-back content decoding section 150, and a sent-back content output section 160.

The shot content acquiring section 110 has the function of taking in a content shot at the location. When the content communication terminal 100 for the location itself is equipped with a camera, a microphone, and other sensors, the shot content acquiring section 110 takes in information from each device. The pieces of information taken in (such as video, sound, and other data strings) may be handled individually or collectively as consolidated multimedia data.

When the content communication terminal 100 for the location itself is not equipped with the camera, the microphone, and the other sensors, the shot content acquiring section 110 takes information in the content communication terminal 100 for the location through an interface or the like for inputting necessary information. The interface in this case can be any video, audio, or data interface, such as DVI (registered trademark), HDMI (registered trademark), component/composite, a stereo jack, or serial.

The shot content acquiring section 110 outputs the acquired content to the shot content encoding section 120. If necessary, the content is output to the shot content encoding section 120 after level or format conversion is performed. Further, when encoding of the shot content is not needed (for example, when there are multiple different modes such as external encoding and store-and-forward transmission), the shot content acquiring section 110 may be configured to send the shot content directly to the shot content transmission section 130.

In the second embodiment of the present invention, description will be made merely as content/content coded data, but whether each of multiple processing entities is executed for each type of information or all are executed collectively is merely a difference in design. Further, when data is processed on multiple entities in parallel, information such as a time stamp for synchronization with time may need to be exchanged between respective entities. However, the synchronization method used to process data on the multiple entities in parallel is beyond the scope of the present invention, such as whether to process data in a synchronous processing system or add time stamp information to each data string to achieve final content synchronization, and any synchronization method can be employed.

The shot content encoding section 120 has the function of encoding the shot content provided from the shot content acquiring section 110, and is configured to include a coarse material content encoding section 121, a broadcast-level material content encoding section 122, and a hierarchical coding management section 123. It is desired that the method of, quality of, and parameters for encoding in the shot content encoding section 120 (encoding in each of the coarse material content encoding section 121 and the broadcast-level material content encoding section 122) should be configured to be controllable from the outside or through a communication line. The content coded data encoded by the shot content encoding section 120 is output to the shot content transmission section 130.

The coarse material content encoding section 121 has the function of encoding the shot content to place emphasis on reduction in delay time. The coarse material content encoding section 121 encodes the shot content in set short-term units of processing (frame by frame, per scanning line, in a unit of several milliseconds, or the like). It is desired that data in each unit of processing should be encoded by a method (e.g., intraframe compression or differential coding from existing processed data) independent of at least the subsequent information so that each unit of processing can be performed without the need to wait for data in the subsequent unit of processing upon decoding. The data encoded and generated in the coarse material content encoding section 121 is called coarse material content coded data.

It is also desired that among the coding parameters, parameters related to the delay time, such as the size of coarse material content coded data and the processing times required for encoding and decoding, should be set small. For example, for the purpose of use in a sent-back content used to check on the composition and timing at the location, the resolution of the video may be reduced by encoding the shot content to place emphasis on reduction in delay time, compared with that of the broadcast-level material. In addition, the color gamut may be monochrome and the sound may be monaural.

Setting the minimum unit of processing data enables reduction in processing time. In general, hierarchical coding structurally increases overhead as a unit of layers increases, while the number of processing units relatively increases as the unit of clipped processing becomes shorter, and this may have impacts, such as an increase in overhead and reduction in the efficiency of encoding. Therefore, it is desired that the short-term unit of processing should be set from a comprehensive standpoint to reduce the total processing time.

Since the coarse material content coded data after being subjected to encoding in the coarse material content encoding section 121 is transmitted sequentially, if there is any excess or deficiency in the coarse material content coded data in regard to one unit of transmission (e.g., a unit of transmitted data size allocated to a transmission period of the communication terminal, a unit of packet size of a transmitted packet, or the like) including overhead related to the other transmissions, it will be considered that the unit does not match the short-term unit of processing, and hence all units are transmitted substantially at the same time regardless of being divided into processing units (where overhead may be increased because of having been divided into processing units), or the unit is further divided into smaller transmission units (where lower delay may be expected). Therefore, it is desired to determine a processing unit in consideration of the transmission unit in the entire design. For example, it is desired that the short-term unit of processing should match the transmission unit or one should be a multiple of the other.

Further, it is desired that the coarse material content coded data encoded by the coarse material content encoding section 121 should be passed from the coarse material content encoding section 121 to the shot content transmission section 130 on a case-by-case basis so that transmission processing will be performed instantaneously.

Further, the coarse material content encoding section 121 may be configured to receive control (dynamic settings of parameters, addition of management information, or the like) from the hierarchical coding management section 123 to enable encoding of a relationship with a corresponding layer (broadcast-level material layer), or receive and pass information from and to the broadcast-level material content encoding section 122.

The broadcast-level material content encoding section 122 has the function of encoding the shot content required quality and parameters to generate necessary information on the broadcast-level material layer. In the hierarchical coding, if there are two or more broadcast-level material content layers, encoding sections may be required for the respective layers. However, description will be made here by taking, as an example, a case where one broadcast-level material content encoding section 122 exists. In other words, two or more broadcast-level material content encoding section 122 exist for respective layers in the hierarchical coding. Data encoded and generated in the broadcast-level material content encoding section 122 is called broadcast-level material content coded data.

Since it can be considered that part of information on the original (captured) video content is encoded in the coarse material content encoding section 121, the broadcast-level material content encoding section 122 just has to encode a difference between the original video content and the information encoded in the coarse material content encoding section 121. The broadcast-level material content encoding section 122 performs, for example, color encoding for monochrome, encoding related to brightness information, encoding related to high-resolution portions for low-resolution video, encoding of a difference of stereo sound from monaural sound, encoding of extended bandwidth sound for narrowband sound, encoding of interpolated data for coarse sampling data, and the like to generate broadcast-level material content coded data.

When a communication channel with a limited transmission band (throughput) is used, since the required quality of the broadcast-level material, data compression ratio for encoding, and the delay time required for processing (which may need to fall within a certain range of delay times though not to be extent of the coarse material content) have correlations with each other, encoding settings may also be needed for the broadcast-level material content. For example, when a technique for compressing video based on correlations between multiple frames (generally called interframe compression) is used to increase the data compression rate, total data transmission is delayed for a period during which the previous data frame remains in a processing buffer to process the multiple frames collectively. The interframe compression is generally irreversible (leaving an interframe decoding error at the time of decoding), and this has impacts, such as the deterioration of image quality, in editing and processing work later. Thus, what kind of encoding is to be performed as encoding of the broadcast-level material content depends on the intended use of the content, and hence it may not necessarily have a hierarchical structure for putting multiple frames together as shown in FIG. 3.

From the above point, encoding of the broadcast-level material content has a large encoding delay compared with encoding of the coarse material content, and the data size is large as well. The broadcast-level material content coded data obtained by encoding performed by the broadcast-level material content encoding section 123 is passed to the shot content transmission section 130 (in each unit if multiple frames are encoded collectively).

Further, the broadcast-level material content encoding section 122 may be configured to receive control (dynamic settings of parameters, addition of management information, or the like) from the hierarchical coding management section 123 to enable encoding of a relationship with a corresponding layer (coarse material content), or receive and pass information from and to the coarse material content encoding section 121.

The hierarchical coding management section 123 the function of managing each encoding in the coarse material content encoding section 121 and the broadcast-level material content encoding section 122 to stratify code in each encoding and configure it as a set of coded data (hierarchical code). Specifically, when a captured shot content is processed in short-term units of processing in the coarse material content encoding section 121, the hierarchical coding management section 123 has the function of managing correspondence relationships with corresponding one or more short-term units of processing in the broadcast-level material content encoding section 122 to add (or encode) an additional information element as a hierarchical coding structure. This may also be called a system layer, and the hierarchical coding management section 123 may associate respective coded data encoded in the coarse material content encoding section 121 and the broadcast-level material content encoding section 122, control the respective encoding sections (dynamic settings of parameters, addition of management information, or the like) or receive and pass information.

The shot content transmission section 130 has the function of sending the coordination station (a content communication device for the coordination station) coded data output from the shot content encoding section 120, or the function of outputting it to an interface with a communication module for transmission (when the communication device itself is connected outside of the content communication terminal 100 for the location). The shot content transmission section 130 is configured to include a coded data acquiring section 131, a coarse material content coded data transmitting section 132, and a broadcast-level material content coded data transmitting section 133.

The coded data acquiring section 131 has the function of acquiring coded data output from the shot content encoding section 120. The coded data acquiring section 131 also has a function which, among the coded data acquired, passes coarse material content coded data to the coarse material content coded data transmitting section 132 and broadcast-level material content coded data to the broadcast-level material content coded data transmitting section 133. From a standpoint of reducing the delay time, it is desired that at least the coded data encoded from the coarse material content (the data encoded by the coarse material content encoding section 121) should be passed to the coarse material content coded data transmitting section 132 without any delay (without passing through a temporary buffer when possible).

The coarse material content coded data transmitting section 132 has a function which, among the coded data acquired in the coded data acquiring section 131, transmits coarse material content coded data to the content communication device for the coordination station. The coarse material content coded data from the coarse material content coded data transmitting section 132 and the broadcast-level material content coded data from the broadcast-level material content coded data transmitting section 133 may be transmitted by different communication methods, respectively. In other words, it is desired that transmission of the coarse material content coded data from the coarse material content coded data transmitting section 132 should be processed by giving priority to reduction in delay time. For example, a channel with a short delay time (communication module, interface, or the like) may be selected as the communication channel. If the parameters of the communication channel can be set (including a case where a request can be made of a node managing the communication channel for a QoS parameter or the like), processing for setting the communication channel to reduce the delay time may be performed, or communication processing (for setting a bearer, a session, a connection, or the like) different from data communication including other coded data may be performed.

The broadcast-level material content coded data transmitting section 133 has a function which, among the coded data acquired in the coded data acquiring section 131, transmits the broadcast-level material content coded data to the content communication device for the coordination station. As for the broadcast-level material content coded data, although the delay time also needs to be managed in the same manner to make it enough for broadcasting (or enough for a dialogue or communication with the coordination station or the studio of the coordination station), the transmission processing can be performed under relaxed conditions compared with the delay time conditions required for the transmission delay of the coarse material content.

It is considered that the data volume of the broadcast-level material content coded data is larger than the data volume of coded data on the coarse material content, and that requirements for transmission of the broadcast-level material content coded data (requirements such as for transmission error and packet loss) are strict compared with the coarse material content coded data. On the contrary, the coarse material content may include data thinned out, in terms of the number of frames or the like, or allow for a certain level of loss in the first place. Therefore, it is desired to select a communication channel (communication module, interface, or the like) and set parameters for the broadcast-level material content coded data to enable transmission of a large volume of data accurately while allowing for some delay time.

Since it is considered that the data volume of the broadcast-level material content to be processed is large and an amount of time is required for encoding in the broadcast-level material content encoding section 122 itself, it is desired that processing should be performed in a communication part (the broadcast-level material content coded data transmitting section 133) substantially to reduce the delay in the time required from acquisition to transmission of the broadcast-level material content coded data as much as possible like in the coarse material content coded data transmitting section 132.

As a result, the broadcast-level material content coded data transmitting section 133 may perform transmission in the same communication settings as the coarse material content coded data transmitting section 132, but it is desired to manage the coarse material content and the broadcast-level material content distinctively from each other as communication management in terms of the bearer, session, connection, and the like.

The sent-back content receiving section 140 has the function of receiving a sent-back content transmitted from the content communication device for the coordination station. The sent-back content is coordinated, edited, and processed at the same timings as the actual broadcasting content, but it is simplified or the rate is made low within a range that satisfies the necessary conditions on the shooting site in terms of the resolution, frame rate, color, and sound. The sent-back content receiving section 140 can receive data other than the sent-back content, such as control voice or sound (including video and other data). For example, data other than the sent-back content include instructions from the coordination station, instructions from the relay station, and signals indicative of on-air/off-air (CM periods or periods of relay broadcasting from the studio of the coordination station or other relay destinations). The sent-back content received by the sent-back content receiving section 140 is passed to the sent-back content decoding section 150, and the other data are passed to a function to handle various data (not shown in FIG. 4).

The sent-back content decoding section 150 has the function of decoding the sent-back content received at the sent-back content receiving section 140. The sent-back content decoding section 150 decodes the sent-back content based on an encoding method in the content communication device for the coordination station. For example, it can be considered that the same encoding method as the coarse material content encoding section 121 is used in the content communication device for the coordination station. The sent-back content decoded in the sent-back content decoding section 150 is passed to the sent-back content output section 160.

The sent-back content output section 160 has the function of outputting the sent-back content decoded in the sent-back content decoding section 150 (and further information processed in association with the sent-back content) via a necessary interface or the like. The sent-back content output section 160 outputs the sent-back content from an output device (monitor, speaker, headphone, or the like) placed at the content communication terminal 100 for the location, an output device placed at each of various devices connected to the content communication terminal 100 for the location, or any other external interface to enable persons at the location (the operators and the shooting target persons) to check the sent-back content. It is desired that the sent-back content output section 160 can output the sent-back content distinctively from the other data and contents or output a mixture thereof as required.

Note that the configuration of the content communication terminal 100 for the location shown in FIG. 4 is just an example. The content communication terminal for the location (or multiple devices connected via an interface) just has to be configured to transmit data capable of sequentially encoding the coarse material content associated with the shot content to place emphasis on the delay time, and receive and output the sent-back content (coordinating content) obtained by editing and processing the coarse material content in the same manner as the the actual broadcasting content. Further, it may be configured such that one functional block is implemented as part of another functional block, or a certain functional block is mounted in another external equipment connectable through an interface.

Next, a configuration example of the content communication device for the coordination station will be described. The following will illustrate that all functional blocks are mounted in one content communication device for the coordination station, but respective functional blocks may be mounted in a distributed manner in plural devices connected through an interface.

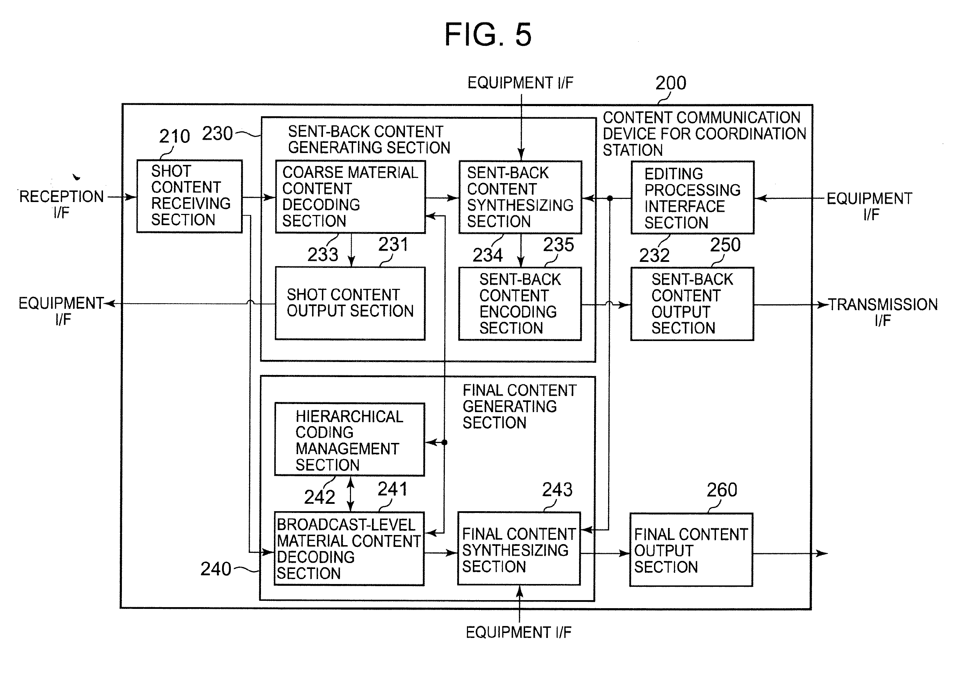

FIG. 5 is a block diagram showing a first example of the configuration of the content communication device for the coordination station in the embodiment of the present invention. A content communication device 200 for the coordination station shown in FIG. 5 has a shot content receiving section 210, a coordination station content acquiring section 220, a sent-back content generating section 230, an editing processing interface section 232, a final content generating section 240, a sent-back content output section 250, and a final content output section 260.

The shot content receiving section 210 receives a coded shot content from the location (the content communication terminal 100 for the location). The coarse material content coded data and the broadcast-level material content coded data are received as the shot content from the content communication terminal 100 for the location. The respective coded data are configured to be handled independently in units of processing while maintaining the association (association information on coded data of corresponding plural layers in a hierarchical structure from the same content communication device for the location, or the like). It is desired to serve also as a function to hold coded data on the shot content temporarily received during a period from when the shot content is received until completion of decoding, other processing, and output of the final content (broadcasting content).

The sent-back content generating section 230 has the function of decoding the coarse material content coded data to generate a sent-back content using the decoded data, and is configured to include a shot content output section 231, a coarse material content decoding section 233, a sent-back content synthesizing section 234, and a sent-back content encoding section 235.

The shot content output section 231 has the function of outputting (displaying) the received shot content (the coarse material content decoded in the coarse material content decoding section 233). The shot content output section 231 may output the shot content to an external interface (such as a monitor or the like). Depending on the editing processing workflow or the like at the coordination station, a block corresponding to this function may be located in the final content generating section 240.

The coarse material content decoding section 233 has the function of acquiring the coarse material content from the received coarse material content coded data. For example, the coarse material content decoding section 233 decodes a content from the system layer of the coded data together with information, such as a time stamp or a frame number, indicative of a correspondence relationship with the broadcast-level material content. For example, in accordance with an instruction from the editing processing interface section 232 or any other control, the coarse material content decoding section 233 passes the decoded coarse material content to the shot content output section 231 (when it is output in the state of the coarse material content). The coarse material content decoding section 233 also passes, to the final content generating section 240, the decoded coarse material content used for synthesis of the final content in the final content generating section 240.

The sent-back content synthesizing section 234 has the function of synthesizing the sent-back content using the coarse material content in accordance with an instruction from the editing processing interface section 232 or any other control. It is desired to make the processing delay and the transmission delay small for the sent-back content as well, and that the sent-back content should be a content processed in a short time upon encoding to be a small data volume of coded data.

In accordance with an instruction from the editing processing interface section 232 or any other control, the sent-back content synthesizing section 234 adjusts the coarse material content in terms of the composition and the like to synthesize the sent-back content (i.e., the coordinating content). Further, when equipment for editing and processing is to be externally connected, the sent-back content synthesizing section 234 may acquire only the synthesized sent-back content. Since this depends on the entire system configuration of the coordination station, this is set as the function of the sent-back content synthesizing section 234 including such a configuration that only the function for acquiring the sent-back content exists in the content communication device 200 for the coordination station. In other words, the sent-back content synthesizing section 234 may be implemented as a sent-back content acquiring section for merely acquiring the sent-back content without synthesizing thereof depending on the system configuration.

The sent-back content encoding section 235 has the function of encoding the sent-back content synthesized in the sent-back content synthesizing section 234. The sent-back content encoding section 235 passes coded data to the sent-back content output section 250. The sent-back content encoding section 235 may encode the sent-back content by an encoding method equivalent to the encoding method for the coarse material content coded data decoded in the coarse material content decoding section 233.

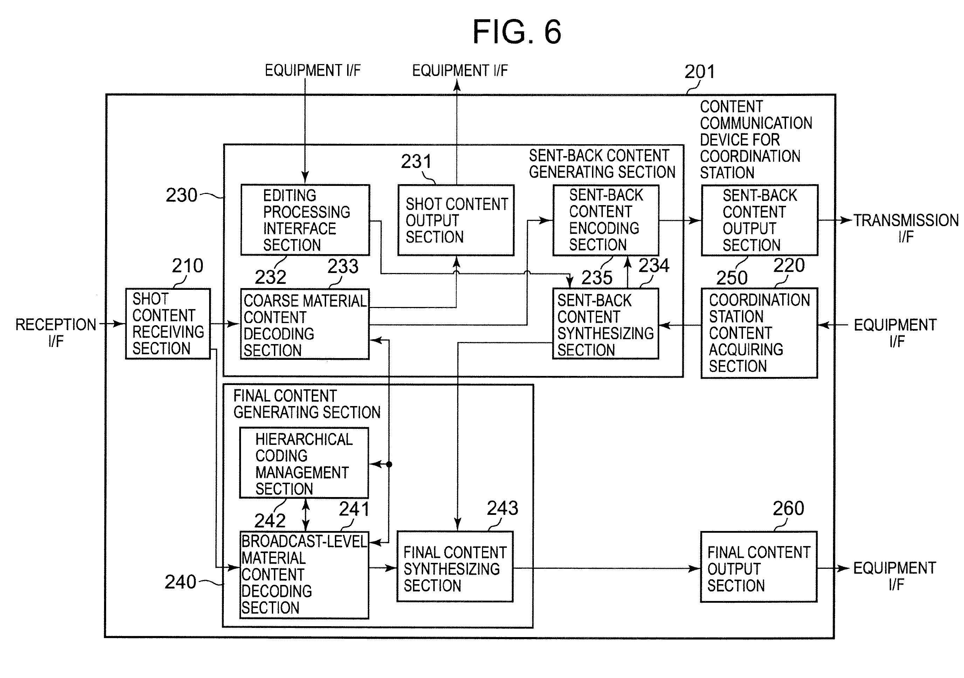

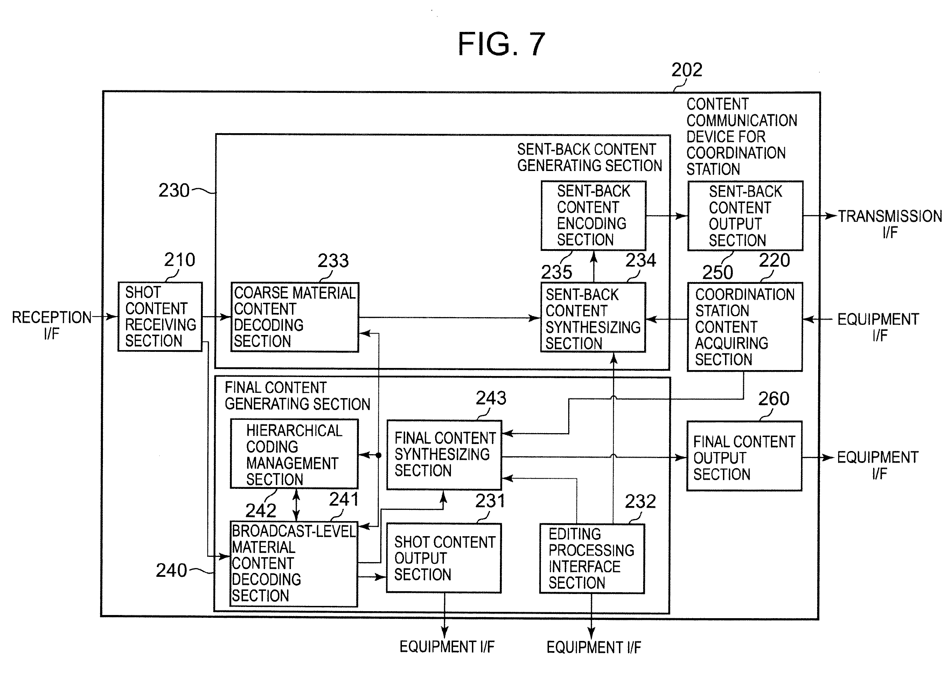

The editing processing interface section 232 is an interface for performing control for switching to or synthesis with a content at the studio of another coordination station or the like. The editing processing interface section 232 works in cooperation with another editing equipment and delivery equipment at the coordination station in sync with the time stamp of the content or the like. Depending on the editing processing workflow or the like at the coordination station, a block corresponding to this function may also be located in the final content generating section 240. The configuration in this case will be described later with reference to FIG. 6 and FIG. 7.

The final content generating section 240 has the function of decoding the broadcast-level material content to generate the final content using the decoded content, and is configured to include a broadcast-level material content decoding section 241, a hierarchical coding management section 242, and a final content synthesizing section 243.

The broadcast-level material content decoding section 241 has the function of acquiring a broadcast-level material content from the received broadcast-level material content coded data (and the coarse material content coded data). For example, the broadcast-level material content decoding section 241 decodes a content from the system layer of the coded data together with information, such as a time stamp or a frame number, indicative of a correspondence relationship with the coarse material content. The broadcast-level material content decoding section 241 synthesizes and adds pieces of information hierarchically arranged in the coarse material content according to information in the hierarchical coding management section 242 to generate a decoded data(broadcast-level material content).

The hierarchical coding management section 242 has the function of managing (holding) a correspondence relationship between the coarse material content and the broadcast-level material content to perform control so that the broadcast-level material content will be decoded with a combination of correct hierarchical structures.

The final content synthesizing section 243 has the function of synthesizing the final content in accordance with an instruction from the editing processing interface section 232 or any other control. The final content synthesizing section 243 can adjust the composition and the like in the same manner as being made in synthesizing the sent-back content in accordance with an instruction from the editing processing interface section 232 or any other control to match the sent-back content (i.e., the coordinating content) to the final content. Further, when editing and processing is performed by external editing equipment, it may have only to pass the broadcast-level material content to the final content output section 260 in accordance with an instruction from the editing processing interface section 232 or any other control.

The sent-back content output section 250 has the function of transmitting, to the content communication terminal 100 for the location, coded data of the sent-back content encoded in the sent-back content encoding section 235. The transmission channel for transmitting the sent-back content to the content communication terminal 100 for the location may be the same interface as the interface that has received the content from the content communication terminal 100 for the location (in the case of bidirectional communication), but it is desired that a more appropriate interface be able to be selected in terms of the delay and stability as the transmission channel from the coordination station toward the location. It is also desired that the transmission parameters such as QoS be able to be set properly.

The final content output section 260 has the function of outputting the synthesized final content (which may be the broadcast-level material content itself depending on the device configuration). This final content (or a content further processed by external editing equipment) is used as the broadcasting content.

This content communication device 200 for the coordination station shown in FIG. 5 has a configuration on the assumption that editing of video, such as to superimpose, by PinP, video at the studio of the coordination station (a content of the coordination station) and insert a telop, is performed by external editing equipment. In other words, the content communication device 201 for the coordination station shown in FIG. 5 is designed on the assumption that editing and processing are performed by external editing equipment or completed in the sent-back content synthesizing section 234 or the final content synthesizing section 243 (without excess and deficiency). On the other hand, other configuration examples of content communication devices 201 and 202 for the coordination station shown in FIG. 6 and FIG. 7 to be described later have a coordination station content acquiring section 220 capable of performing processing for synthesizing the sent-back content or the final content with the content of the coordination station inside the content communication device 200 for the coordination station.

FIG. 6 is a block diagram showing a second example of the configuration of the content communication device for the coordination station in the embodiment of the present invention. A content communication device 201 for the coordination station shown in FIG. 6 has a shot content receiving section 210, a coordination station content acquiring section 220, a sent-back content generating section 230, a final content generating section 240, a sent-back content output section 250, and a final content output section 260.

The coordination station content acquiring section 220 has the function of acquiring necessary contents (a content at the studio of the coordination station, and the like) other than the shot content sent from the content communication terminal 100 for the location. When there is no need to acquire the contents other than the shot content, or when editing and processing are completed by external equipment or in the sent-back content synthesizing section 234 or the final content synthesizing section 243 (without excess and deficiency), the coordination station content acquiring section 220 does not necessarily need to be provided.

Although the function of each block in the content communication device 201 for the coordination station shown in FIG. 6 is basically the same as each of the above-mentioned functions, a major difference is that the shot content output section 231 and editing processing interface section 232 are incorporated in the sent-back content generating section 230. In other words, the content communication device 201 for the coordination station shown in FIG. 6 is configured such that a coarse material content is output from a monitor or the like to complete the editing and processing of the coarse material content through the editing processing interface section 232, and upon generation of a final content, the results of editing and processing a sent-back content are synthesized with a broadcast-level material content obtained by simple decoding of hierarchically coded data in the final content synthesizing section 243.

FIG. 7 is a block diagram showing a third example of the configuration of the content communication device for the coordination station in the embodiment of the present invention. The content communication device 202 for the coordination station shown in FIG. 7 also has the shot content receiving section 210, the coordination station content acquiring section 220, the sent-back content generating section 230, the final content generating section 240, the sent-back content output section 250, and the final content output section 260, but largely differs from the content communication device 201 for the coordination station shown in FIG. 6 in that the shot content output section 231 and the editing processing interface section 232 are incorporated in the final content generating section 240, and both the sent-back content and the final content are edited and processed in the editing processing interface section 232.

In other words, in the content communication device 202 for the coordination station 202 shown in FIG. 7, the coarse material content and the broadcast-level material content are edited and processed through the editing processing interface section 232 while checking, on a monitor or the like, video with an image quality equivalent to that of the broadcast-level material content. Further, editing and processing are possible even at timing after the broadcast-level material content equivalent to the final quality of content is synthesized. For example, only the layout of a PinP window is determined in the sent-back content, and video data or the like at the studio of the coordination station is acquired from the coordination station content acquiring section 220 to fit it in the PinP window immediately before the final content is synthesized so that video/audio data matching the timing of response can be synthesized.

Note that the configurations of the content communication devices 200, 201, and 202 for the coordination station shown in FIG. 5 to FIG. 7 are just examples. The content communication device for the coordination station (or multiple devices connected via an interface) just has to be configured to synthesize editing and processing, to which the actual broadcasting content is subjected, with the coarse material content to generate and transmit a sent-back content, and further synthesize the results of editing and processing, to which the coarse material content was subjected, in the final content (the actual broadcasting content) corresponding to the coarse material content. Further, the configurations shown in FIG. 5 to FIG. 7 may be used in combination. In addition, it may be configured such that one functional block is implemented as part of another functional block, or a certain functional block is mounted in another external equipment connectable through an interface.

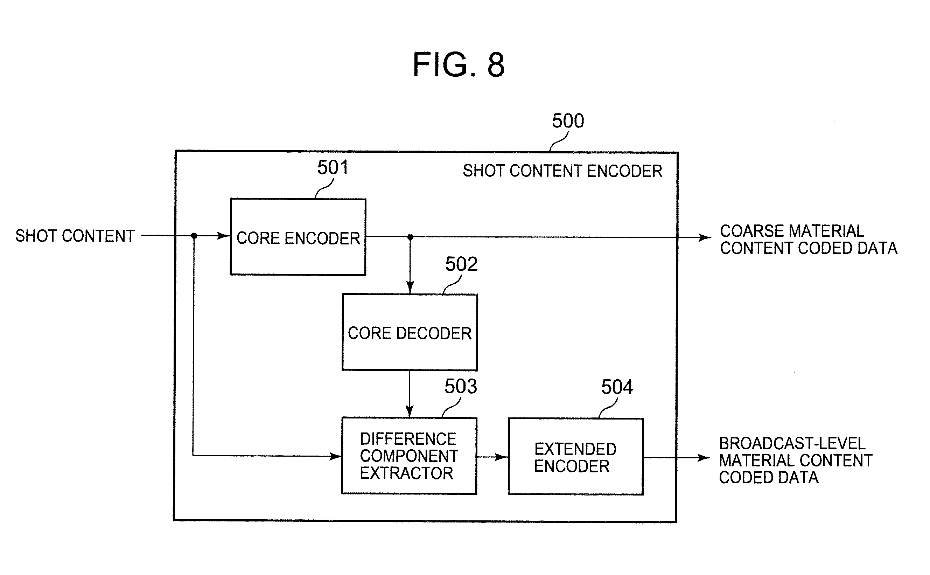

FIG. 8 is a block diagram showing an example of the configuration of a shot content encoder in the second embodiment of the present invention. Although a shot content encoder 500 shown in FIG. 8 can be arranged in the content communication terminal 100 for the location shown in FIG. 4, FIG. 8 is illustrated by focusing on a function to create coarse material content coded data and broadcast-level material content coded data from a shot content using a hierarchical coding technique.

The shot content encoder 500 shown in FIG. 8 has a core encoder 501, a core decoder 502, a difference component extractor 503, and an extended encoder 504. The core encoder 501, the core decoder 502, and the extended encoder 504 correspond to a coarse material content encoder, a coarse material content decoder, and a broadcast-level material content encoder, respectively.

A shot content input into the shot content encoder 500 is supplied to the core encoder 501 and the difference component extractor 503. First, the core encoder 501 encodes the shot content to generate coarse material content coded data. The coarse material content coded data generated in the core encoder 501 is supplied to the core decoder 502. The core decoder 502 performs decoding processing on the supplied coarse material content coded data to obtain a coarse material content, and supplies the coarse material content to the difference component extractor 503.

The difference component extractor 503 extracts a difference component between the supplied shot content and the coarse material content, and supplies the difference component to the extended encoder 504. The extended encoder 504 encodes the supplied difference component to generate broadcast-level material content coded data. Then, the coarse material content coded data obtained in the core encoder 501 and the broadcast-level material content coded data obtained in the extended encoder 504 are output, respectively.

In consideration of reduction in delay time with respect to the timings of outputting and transmitting coded data, coarse material content coded data is first output from the shot content encoder 500 to transmit the coarse material content coded data instantaneously when the coarse material content coded data is obtained, and broadcast-level material content coded data obtained after the remaining processing is performed is next output from the shot content encoder 500. According to this hierarchical coding, a coarse material content is obtained by the core decoder (coarse material content decoder) using part (coarse material content coded data) of the obtained coded data in decoding side processing after transmission, and a content obtained by decoding performed by an extended decoder using the remaining code (part of the broadcast-level material content coded data) is added to decode the original shot content, so that a broadcast-level material content can be obtained.

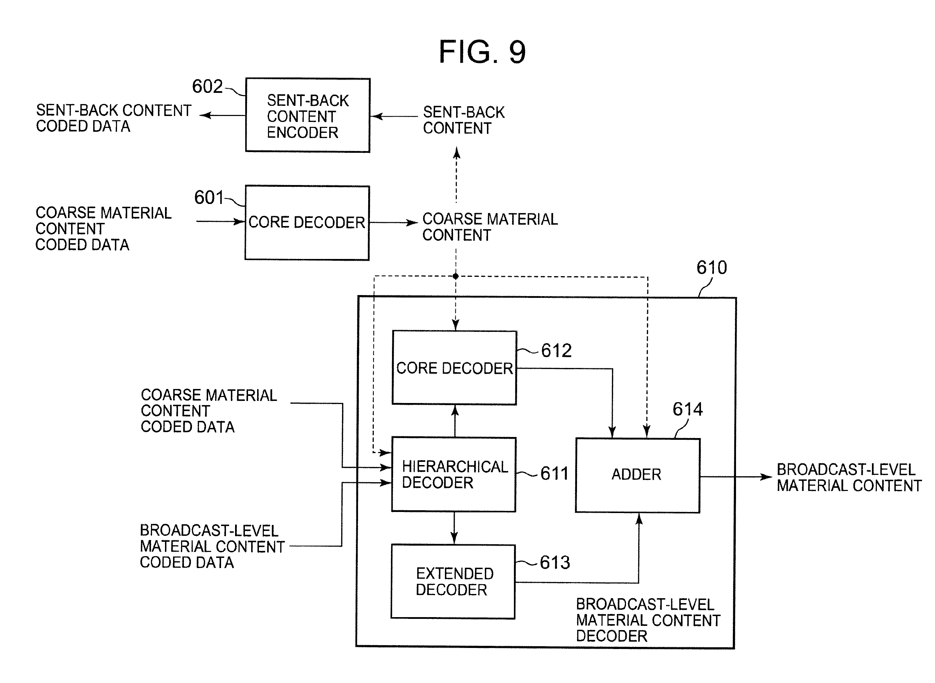

FIG. 9 is a block diagram showing an example of the configuration of a broadcast-level material content decoder and a sent-back content encoder in the second embodiment of the present invention. Although a core decoder 601, a sent-back content encoder 602, and a broadcast-level material content decoder 610 shown in FIG. 9 can be arranged in the content communication devices 200, 201, and 202 for the coordination station shown in FIG. 5 to FIG. 7, FIG. 9 is illustrated by focusing on the function of creating a coarse material content from coarse material content coded data, the function of using a hierarchical coding technique to create a broadcast-level material content from coarse material content coded data and broadcast-level material coded data, and the function of creating sent-back content coded data from a sent-back content. The core decoder 601 and a core decoder 612 have the same function of decoding the coarse material content coded data, and they may be realized as the same decoder.

In FIG. 9, when part (coarse material content coded data) of coded data obtained in a hierarchical encoder (the shot content encoder 500 shown in FIG. 8) is received, it is input immediately into the core decoder 601 and a coarse material content is obtained by decoding performed by the core decoder 601. The coarse material content thus obtained is further edited and processed to be usable as a coordinating content (sent-back content). The sent-back content is encoded by the sent-back content encoder 602, and the data after being encoded (sent-back content coded data) is sent back to the content communication terminal 100 for the location. Since the sent-back content does not require high quality from the transmission destination (i.e., the shot content encoder 500 shown in FIG. 8), it can be encoded at a low rate.

The broadcast-level material content decoder 610 shown in FIG. 9 has a hierarchical decoder 611, the core decoder 612, an extended decoder 613, and an adder 614.

The coarse material content coded data the broadcast-level material content coded data are input into the hierarchical decoder 611 for grasping only the system layer of hierarchical coded data. Then, under the control of the hierarchical decoder 611 (the management of correspondence relationships between respective hierarchical coded data, or the like), decoding is first performed using all pieces of coded data at a core decoder (decoder equivalent to the coarse material content decoder) 612 to acquire a coarse material content, and decoding is next performed at the extended decoder 613 to acquire data corresponding to a difference component from the shot content (i.e., data belonging to the broadcast-level material layer). Then, these pieces of data are added at the adder 614 to acquire a broadcast-level material content.

In a usage pattern of the present invention, since the coarse material content decoder can be configured as if to operate in parallel or ahead to generate a sent-back content separately, output of a coarse material content decoder for performing only the decoding of the coarse material content coded data can be used instead of the core decoder. Further, the coarse material content decoded ahead to generate the sent-back content (i.e., the coarse material content decoded in the core decoder 601) can be supplied to the hierarchical decoder 611, the core decoder 612, or the adder 614 to perform the same processing in the broadcast-level material content decoder 610.

In creating the final content, when the coarse material content coded data and the broadcast-level material content coded data are decoded (and as a result, a broadcast-level material content is obtained), and the broadcast-level material content thus obtained is edited and processed to generate the final content, the processing can be performed easily. On the other hand, for example, when data obtained by decoding the coarse material content coded data is edited and processed, and data obtained by decoding the broadcast-level material content coded data is further used to obtain the final content, special processing or codec may be required.

While the the present invention is described in each of the aforementioned embodiments on the premise of television broadcasting or network delivery, the encoding method, the send-back method, the transmission system, and the like according to the present invention can be applied to other existing data communication techniques and various data communication techniques expected to develop in the future. Especially, in data communication that is becoming possible to allow individuals carrying mobile terminals to distribute/deliver contents shot in various places regardless of the general public or specific members, the present invention can be widely applied as a personal data delivery method and an intermediate delivery service providing method. Further, even if the content is single medium data such as sound only (radio broadcasting or the like) or video only (surveillance), it will be apparent that the present invention is applicable.

Further, for ease of explanation, there are portions to use expressions, such as transmission to the location and transmission to the coordination station, to describe the present invention, but in a practical sense, the communication terminal on the location side and the communication device on the coordination station side of the present invention communicate with each other. Further, depending on the system configuration, a device capable of implementing various functions may be installed at the relay station as well as the location and the coordination station. In such a case, for example, the shot content encoding section and the shot content transmission section described as being mounted in the communication terminal on the location side (e.g., hierarchical coding processing and coded data transmission processing as core processing of the present invention) may be mounted in the device at the relay station so that only the sent-back content (coordinating content) will be received, decoded, and displayed at the location.

In an actual usage environment, it is considered that the devices of the present invention may be active before and after the start of relay broadcasting. In this case, the content shot at the location is received (and stored) at the coordination station, but as the sent-back content, a content actually broadcast or delivered (i.e., only the content shot at the studio of the coordination station without being subjected to synthesis with the shot content) is sent back to do coordination work such as to adjust the timing of starting relay broadcasting. Therefore, the shot contents (both the coarse material content and the broadcast-level material content) do not need to be virtually synthesized/edited. In this case, in the content communication device for the coordination station, instead of encoding the sent-back content (the sent-back content obtained by synthesizing and processing the coarse material content) based on the coarse material content, the coarse material content or the broadcast-level material content is output to equipment at the coordination station, a sent-back content such as the content short at the studio of the coordination station or the like is used as input, encoded, and sent back. Here, such an operating mode is called an idling mode. The above-mentioned mode for normal relay broadcasting and the idling mode may be switched at the timings of the start/end of relay broadcasting, respectively.

Further, in the aforementioned embodiments, hierarchical coding is so applied that data obtained by adding the coarse material content and the broadcast-level material content is matched to the shot content without excess and deficiency. However, if the communication terminal on the location side has the function of generating and transmitting a coarse material content to the coordination station and the coordination station (decoding side) can decode the shot content, redundant data encoding that does not match the hierarchical coding technique does not need performing. For example, in the shot content encoder 500 shown in FIG. 5, the extended encoder 504 may generate broadcast-level material content coded data including a content overlapping with part of or the entire coarse material content. In this case, the decoding side just has to perform processing on the assumption that part of or the entire coarse material content overlapped is included in the broadcast-level material content coded data. When encoding is performed to include the entire coarse material content in the broadcast-level material content coded data, the shot content encoder 500 just has to have the core encoder 501 and an encoder (shot content encoder) for encoding the entire shot content input to transmit the coarse material content coded data immediately and to transmit data obtained by encoding the entire shot content later.

Each functional block used in the explanation of the aforementioned embodiments of the present invention can be realized as an LSI (Large Scale Integration) that is typically an integrated circuit. Each functional block can be individually formed into a single chip, or some or all of the functional blocks can be included and formed into a single chip. Although referred to here as the LSI, the integrated circuit may be referred to as an IC (Integrated Circuit), a system LSI, a super I_SI, or an ultra LSI depending on differences in integration.

The method of forming the integrated circuit is not limited to LSI and can be actualized by a dedicated circuit or a general-purpose processor. An FPGA (Field Programmable Gate Array) that can be programmed after LSI manufacturing or a reconfigurable processor of which connections and settings of the circuit cells within the LSI can be reconfigured may be used.

Further, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

The present invention has the advantage of enabling a location side to check quickly on how the operation performed at the location (location side) is reflected as a broadcasting content upon relay broadcasting from the location, and is applicable to a technique for encoding and transmitting content data.

## Claims

1. A content communication device for transmitting content data shot at a location to a content processing device for editing a broadcasting content, the content communication device comprising:
a shot content acquiring section for acquiring the shot content data;
a first encoding section for encoding, with a predetermined quality, the shot content data acquired by the shot content acquiring section to generate first coded data;
a first transmission section for transmitting the first coded data generated by the first encoding section sequentially toward the content processing device;
a second encoding section for extracting, from the shot content data, additional information for increasing a quality of video included in the first coded data and encoding the additional information to generate second coded data; and
a second transmission section for transmitting the second coded data generated by the second encoding section toward the content processing device.

2. The content communication device according to claim 1, wherein the content communication device is configured such that a communication method for the first coded data practiced by the first transmission section differs from a communication method for the second coded data practiced by the second transmission section.

3. The content communication device according to claim 2, wherein the content communication device is configured such that a communication path to the content processing device for use in communication of the first coded data performed by the first transmission section differs from a communication path to the content processing device for use in communication of the second coded data performed by the second transmission section.

4. The content communication device according to claim 2, wherein the content communication device is configured such that a QoS setting to the content processing device for use in communication of the first coded data performed by the first transmission section differs from a QoS setting to the content processing device for use in communication of the second coded data performed by the second transmission section.

5. The content communication device according to claim 1, wherein the first encoding section and the second encoding section are configured to perform hierarchical coding on the video content data in such a manner that the first encoding section generates coded data of a core layer in the hierarchical coding as the first coded data and the second encoding section generates coded data of an enhancement layer in the hierarchical coding as the second coded data.

6. The content communication device according to claim 5, further comprising:
a decoding section for decoding the first coded data generated by the first encoding section to generate decoded data; and
a difference component extracting section for extracting a difference component between the shot content data acquired by the shot content acquiring section and the decoded data generated by the decoding section to generate difference component data,
wherein the second encoding section is configured to set the difference component data generated by the difference component extracting section as coded data of the enhancement layer in the hierarchical coding to generate the second coded data.

7. The content communication device according to claim 1, wherein the first encoding section is configured to generate the first coded data in units of transmission in the first transmission section.

8. The content communication device according to claim 7, wherein in regard to a unit of encoding the first coded data generated by the first encoding section and a unit of transmission in the first transmission section, one is set to be a multiple of the other.

9. The content communication device according to claim 1, wherein the second encoding section is configured to collectively encoding information corresponding to plural units of encoding the first coded data generated by the first encoding section in order to generate the second coded data.

10. The content communication device according to claim 9, wherein the content communication device is configured such that the first encoding section performs frame-by-frame compression coding and the second encoding section performs interframe compression coding.

11. The content communication device according to claim 1, wherein the first encoding section is configured to determine a unit of dividing sound included in the shot content to be matched to a unit of dividing video included in the shot content in order to generate the first coded data.

12. The content communication device according to claim 1, further comprising:
a coordinating content receiving section for receiving a coordinating content sent back after some or all editing jobs to be reflected in an actual broadcasting content are performed on the first coded data in the content processing device; and
a coordinating content output section for outputting the coordinating content to enable a user at the location to check on the coordinating content.

13. A content communication device for transmitting content data shot at a location to a content processing device for editing a broadcasting content, the content communication device comprising:
a shot content acquiring section for acquiring the shot content data;
a shot content transmission section for transmitting the shot content data acquired by the shot content acquiring section toward the content processing device;
a coordinating content receiving section for receiving a coordinating content sent back after some or all editing jobs to be reflected in an actual broadcasting content are performed on the shot content data in the content processing device; and
a coordinating content output section for outputting the coordinating content to enable a user at the location to check on the coordinating content.

14. A content processing device for editing a broadcasting content, comprising:
a first coded data receiving section for receiving first coded data from a content communication device acquiring content data shot at a location, wherein the content communication device encodes the shot content data with a predetermined quality to generate the first coded data;
a first coded data decoding section for decoding the first coded data;
an editing processing section for performing, on the first coded data after being decoded, some or all editing jobs to be reflected in an actual broadcasting content; and
a coordinating content transmission section for transmitting the decoded first coded data edited by the editing processing section toward the content communication device as a coordinating content.

15. The content processing device according to claim 14, further comprising an encoding section for encoding the first coded data after being decoded and edited by the editing processing section by a method identical to an encoding method for the first coded data to generate the coordinating content.

16. The content processing device according to claim 14, further comprising:
a second coded data receiving section for receiving second coded data from the content communication device, wherein the content communication device extracts and encodes additional information for increasing a quality of video included in the first coded data from the shot content data to generate the second coded data; and
a second coded data decoding section for decoding the second coded data.

17. The content processing device according to claim 16, further comprising
a broadcasting content output section for outputting, as a broadcasting content to be actually broadcasted, a content obtained by editing a content in the editing processing section, wherein the content to be edited is obtained by adding the first coded data after being decoded and the second coded data after being decoded, or a content obtained by reflecting the decoded second coded data in the coordinating content.

18. The content processing device according to claim 16, further comprising:
a content data acquiring section for acquiring a content based on the first coded data after being decoded by the first coded data decoding section and the second coded data after being decoded by the second coded data decoding section;
a broadcast editing processing section for editing the content acquired by the content data acquiring section; and
a broadcasting content output section for outputting, as a broadcasting content to be actually broadcasted, the content after being edited by the broadcast editing processing section.

19. The content processing device according to claim 16, wherein the first coded data decoding section and the second coded data decoding section are configured to perform decoding of hierarchically coded data in such a manner that the first coded data decoding section acquires data of a core layer in the hierarchical coding from the first coded data and the second coded data decoding section acquires data of an enhancement layer in the hierarchical coding from the second coded data in order to acquire a content based on the data of the core layer and the data of the enhancement layer.

20. The content processing device according to claim 14, further comprising an external content acquiring section for acquiring an external content, wherein the editing processing section is configured to synthesize, during the editing, the already acquired external content with the first coded data after being decoded.

21. The content processing device according to claim 14, further comprising:
an external content acquiring section for acquiring an external content; and
a synchronization control section for synchronizing the shot content data and the external content when the external content is synthesized during the editing in the editing processing section,
wherein the editing processing section is configured to synthesize, as the editing, the external content with the first coded data after being decoded based on the synchronization control performed by the synchronization control section.

22. The content processing device according to claim 14, further comprising:
an external content acquiring section for acquiring an external content; and
an external content transmission section for transmitting the external content toward the content communication device as a coordinating content,
wherein the content processing device is configured such that, when content data shot at the location is used for actual broadcasting, the coordinating content is transmitted by the coordinating content transmission section, while when the content data shot at the location is not used for actual broadcasting, the coordinating content is transmitted by the external content transmission section.

23. A content processing device for editing a broadcasting content, comprising:
a shot content data receiving section for receiving content data shot at a location from the content communication device;
an editing processing section for performing, on the received shot content data, some or all editing jobs to be reflected in an actual broadcasting content; and
a coordinating content transmission section for transmitting the shot content data edited by the editing processing section toward the content communication device as a coordinating content.

24. A content communication system configured to include a content processing device for editing a broadcasting content and a content communication device for transmitting content data shot at a location to the content processing device, wherein
the content communication device comprises:
a shot content acquiring section for acquiring the shot content data;
a first encoding section for encoding, with a predetermined quality, the shot content data acquired by the shot content acquiring section to generate first coded data;
a first transmission section for transmitting the first coded data generated by the first encoding section sequentially toward the content processing device;
a second encoding section for extracting, from the shot content data, additional information for increasing a quality of video included in the first coded data and encoding the additional information to generate second coded data;
a second transmission section for transmitting the second coded data generated by the second encoding section toward the content processing device;
a coordinating content receiving section for receiving a coordinating content sent back after some or all editing jobs to be reflected in an actual broadcasting content are performed on the first coded data in the content processing device; and
a coordinating content output section for outputting the coordinating content to enable a user at the location to check on the coordinating content, and
the content processing device comprises:
a first coded data receiving section for receiving the first coded data from the content communication device;
a first coded data decoding section for decoding the first coded data;
an editing processing section for performing, on the first coded data after being decoded, some or all editing jobs to be reflected in an actual broadcasting content;
a coordinating content transmission section for transmitting the first coded data after being decoded and edited by the editing processing section toward the content communication device as the coordinating content;
a second coded data receiving section for receiving the second coded data from the content communication device;
a second coded data decoding section for decoding the second coded data; and
a broadcasting content output section for outputting, as a broadcasting content to be actually broadcasted, a content obtained by editing a content in the editing processing section, wherein the content to be edited is obtained by adding the first coded data after being decoded and the second coded data after being decoded, or a content obtained by reflecting the decoded second coded data in the coordinating content.

25. A content communication system configured to include a content processing device for editing a broadcasting content and a content communication device for transmitting content data shot at a location to the content processing device, wherein
the content communication device comprises:
a shot content acquiring section for acquiring the shot content data;
a transmission section for transmitting, toward the content processing device, the shot content data acquired by the shot content acquiring section;
a coordinating content receiving section for receiving a coordinating content sent back after some or all editing jobs to be reflected in an actual broadcasting content are performed on the shot content in the content processing device; and
a coordinating content output section for outputting the coordinating content to enable a user at the location to check on the coordinating content, and
the content processing device comprises:
a shot content data receiving section for receiving the shot content data from the content communication device;
an editing processing section for performing, on the received shot content data, some or all editing jobs to be reflected in an actual broadcasting content;
a coordinating content transmission section for transmitting the shot content data edited by the editing processing section toward the content communication device as a coordinating content; and
a broadcasting content output section for creating and outputting a broadcasting content in which the content edited by the editing processing section is reflected.
